**Europäisches Patentamt**

**European Patent Office**

**Office européen des brevets**

(11) Publication number: **0 209 258**
**B1**

## (12) EUROPEAN PATENT SPECIFICATION

(45) Date of publication of patent specification: **10.01.90**

(21) Application number: **86304673.6**

(22) Date of filing: **17.06.86**

(51) Int. Cl.⁵: **B 60 R 22/10**

(54) **Safety harness.**

(30) Priority: **17.06.85 BR 6500811 u**

(43) Date of publication of application:
**21.01.87 Bulletin 87/04**

(45) Publication of the grant of the patent:
**10.01.90 Bulletin 90/02**

(84) Designated Contracting States:
**AT BE CH DE FR GB IT LI LU NL SE**

(56) References cited:
**FR-A-1 464 841**
**GB-A-1 085 646**
**US-A-2 888 063**
**US-A-3 301 594**
**US-A-3 529 864**

(73) Proprietor: **Parkinson, James Graham**
**18 Reid Street**
**Hamilton 5 Bermuda (BM)**
(73) Proprietor: **Kirsten, Thomas Peter**
**Rua Joao Alves Soares 99**
**Sao Paulo-SP (BR)**

(72) Inventor: **Kirsten, Thomas Peter**
**Rua Joao Alves Soares 99**
**Sao Paulo (BR)**

(74) Representative: **Lesley, Sheila F. et al**
**FORRESTER & BOEHMERT Widenmayer Strasse 4/I**
**D-8000 München 22 (DE)**

Courier Press, Leamington Spa, England.

## Description

This invention relates to a safety harness for persons travelling in a vehicle. The invention is of particular, but not exclusive, utility, for safeguarding children travelling on the back seats of motor cars.

When children travel in cars they normally travel in the back seats thereof, and, indeed, it is normally recommended that they should do so for safety reasons. It is furthermore to be recommended that children so travelling should be restrained against being flung forwards or sideways or otherwise out of the seat occupied in the event of an accident.

A number of systems have been devised to secure a child in or on the seat of a motor vehicle. Examples of such devices include children's seats and belts; however, many of these known devices suffer from the disadvantage that because the child basically remains "anchored" the whole time it generally finds travelling quite uncomfortable.

US—A—2,888,063 discloses a safety harness for use by a child travelling in a vehicle, and including a body harness portion, including a first belt which is fastened around the child's chest and carries shoulder straps extending over the child's shoulders, and a second belt which is fastened around the child's waist and carries a crotch strap extending between the child's legs. Both belts carry strap loops, at the back of the harness through which passes a strap which is extended around the seat back of the vehicle and is fastened together at its ends by a buckle.

The arrangement of US—A—2,888,063 allows the child whilst remaining secured to the vehicle seat, to stand up, sit down, and move around to a limited extent.

It is an object of the present invention to provide a safety harness which, whilst affording the above advantages of the harness of US—A—2,888,063, is of simpler and improved construction.

According to the invention there is provided a safety harness for use by a child travelling in a vehicle, and including a body harness portion adapted to be secured around the body of such person, said body harness portion including a belt adapted to extend around the waist or chest of the wearer and to be secured by a buckle, two shoulder straps each extending from a front part of said belt around a respective shoulder of the wearer to a back part of said belt, a guide member carried by the body harness portion at the rear thereof, the safety harness further comprising a static harness portion in the form of a single strap provided with adjustable fastening means whereby the ends of the last-mentioned static harness strap can be secured together after the strap has been extended around a seat back, said static harness strap extending through an aperture provided by said guide member whereby the guide member, and with it the body harness portion, can slide along said strap whilst being retained thereon, characterised in that said guide member is an annular collar or ring through which said static harness strap passes freely, and in that said shoulder straps both also pass through the aperture provided by the collar and cross over as they pass through said collar, the shoulder straps being secured to said body harness belt at respective spaced-apart points behind the wearer.

An embodiment of the invention is described below, by way of example, with reference to the accompanying drawings, in which:

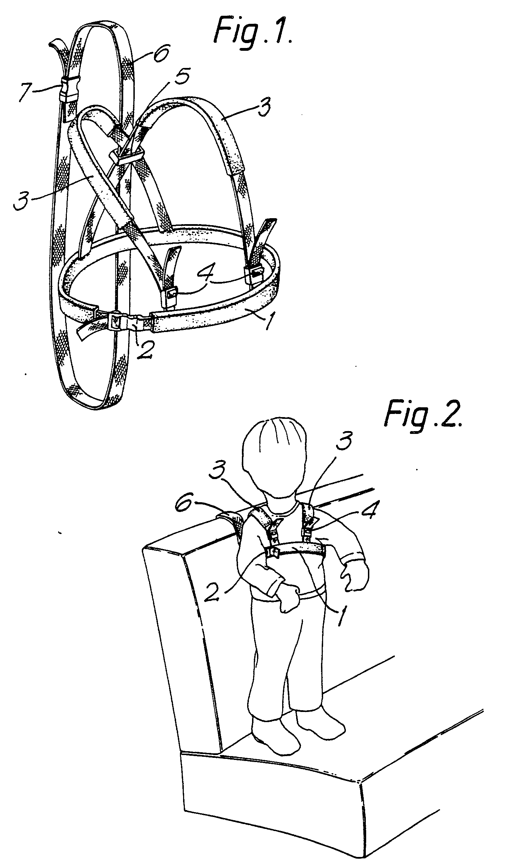

FIGURE 1 is a perspective view of a safety harness embodying the invention;

FIGURE 2 is a perspective view showing the device in use.

Referring to the drawings, the safety harness includes a body harness portion which comprises a belt 1 which, in use, extends around the waist or chest of the child and is fastened by means of a buckle 2. Two shoulder straps or braces-like elements 3 extend from spaced-apart locations on the back portion of the belt 1, cross at the back of the wearer, extend over the wearer's shoulders and are fastened at the front, to the belt 1, by adjustable buckles 4. The elements 3 extend through an annular collar 5 at the place where the elements 3 cross one another. The safety harness further comprises a static portion which takes the form of a long belt 6 which also extends through the collar 5. The ends of the belt 6 can be secured together by means of an adjustable buckle 7.

To use the safety harness, the belt 1 is placed around the child with the child's arms extended through the respective apertures defined between the shoulder straps 3 and the belt 1, the buckle 2 fastened and the buckles 4 adjusted if necessary. The long belt 6 is extended through the collar 5 and around the back of the car seat on which the child is placed, the belt 6 being fastened by means of the buckle 7, conveniently located behind the seat back. Where the child is to travel on a car back seat of the usual block or bench form, the belt 6 is preferably arranged substantially in the middle of the back seat so that the child cannot reach the door handles, locks, windows, etc.

The long belt 6 thus extends substantially vertically over the front of the seat and the child can stand up or sit down as it wishes, the collar 5, during such movement, sliding freely along the portion of strap 6 on the front of the seat. The collar 5 preferably extends fairly loosely around the straps 3 and 6, so that not only is free vertical movement along strap 6 not impeded normally, but the collar can tilt somewhat relative to straps 3 and 6, so that the child may even lie down on the seat. Nevertheless, the child is restrained from being flung forwardly in the event of an accident or sudden deceleration and from being flung sidewards. The child's safety is therefore ensured, and thus the peace of mind of the adult or adults in charge of the child.

It will be appreciated that many variations are possible within the scope of the appended claims. Thus, the belt 6, instead of being merely looped around the seat back, may be fastened at either end to mountings secured to seat-belt mounting points where these are provided in the motor car. In this case, at least one end of the static strap may have a quick release fastener which can pass readily through the aperture in collar 5. The collar 5 may take the form of a conventional buckle, for example being in the form of a plate with two or more slots or apertures, one for the straps 3 and one for the strap 6.

The buckles 2 and 4 may conveniently be of child-proof, quick-release type. The body harness portion may likewise take different forms and may, for example, take the form of a waistcoat or the like garment of an appropriate fabric.

The harness described with reference to the drawings may be used, when not fitted in a car, as a conventional walking harness or rein, allowing a toddler to walk on his own whilst being safety attached to an attending adult. To this end, the buckle 7 may be made of a size and shape which will not pass through the respective aperture in the collar 5 but will be arrested thereby, when the other end of strap 6 is held, to provide an attachment with the harness body portion.

It will be appreciated that the harness described with reference to the drawings is simple in construction and inexpensive to manufacture.

## Claims

1. A safety harness for use by a child travelling in a vehicle, and including a body harness portion (1—5) adapted to be secured around the body of such person, said body harness portion including a belt ( 1) adapted to extend around the waist or chest of the wearer and to be secured by a buckle (2), two shoulder straps (3) each extending from a front part of said belt around a respective shoulder of the wearer to a back part of said belt, a guide member (5) carried by the body harness portion at the rear thereof, the safety harness further comprising a static harness portion in the form of a single strap (6) provided with adjustable fastening means (7) whereby the ends of the last-mentioned static harness strap can be secured together after the strap (6) has been extended around a seat back, said static harness strap (6) extending through an aperture provided by said guide member (5) whereby the guide member, and with it the body harness portion, can slide along said strap (6) whilst being retained thereon, characterised in that said guide member (5) is an annular collar or ring (5) through which said static harness strap (6) passes freely, and in that said shoulder straps (3) both also pass through the aperture provided by the collar (5) and cross over as they pass through said collar, the shoulder straps (3) being secured to said body harness belt at respective spaced-apart points behind the wearer.

2. A safety harness according to claim 1 characterised in that said adjustable fastening means of said static harness strap (6) comprises a buckle (7) at one end of said strap (6), and in that said buckle (7) is too large to pass through the aperture in said collar (5), whereby said buckle (7), when the static harness strap has been detached from the car seat, can act as a retaining element preventing said body harness from being detached from said static harness strap, which may be used as a rein or leash held at its other end by an adult, the body harness portion and static harness strap in this case functioning as a conventional walking harness with rein.

## Patentansprüche

1. Sicherheitsgurtgeschirr für ein in einem Fahrzeug mitreisendes Kind, mit einem Körpergurtgeschirrteil (1—5), daß um den Körper einer solchen Person herum befestigt werden kann, wobei besagter Körpergurtgeschirrteil einen Gurt (1), der sich um die Taille oder Brust des Trägers herum erstrecken und mit einer Schnalle (2) befestigt werden kann, zwei Schulterriemen (3), die sich von einem Vorderteil besagten Gurts jeweils um eine Schulter des Trägers herum zu einem Rückenteil besagten Gurts erstrecken, und ein Führungsteil (5) einschließt, das von dem Körpergurtgeschirrrteil an dessen Rückseite gehalten wird, wobei das Sicherheitsgurtgeschirr außerdem ein statisches Gurtgeschirrteil in Form eines Einzelriemens (6) umfaßt, der mit einstellbaren Befestigungsmitteln (7) versehen ist, durch welche die Enden des eben erwähnten statischen Gurtgeschirriemens zusammengehalten werden können, nachdem der Riemen (6) um einen Rücksitz herum gezogen worden ist, wobei besagter statischer Gurtgeschirriemen (6) sich durch eine Öffnung erstreckt, die von besagtem Führungsteil (5) bereitgestellt wird, wodurch das Führungsteil, und mit diesem das Körpergurtgeschirrteil, an besagtem Riemen (6) entlanggleiten kann, während es darauf gesichert ist, dadurch gekennzeichnet, daß besagtes Führungsteil (5) eine ringförmige Manschette oder ein Ring (5) ist, durch den besagter statischer Gurtgeschirriemen (6) frei hindurchläuft, und daß besagte Schulterriemen (3) ebenfalls beide durch die von der Manschette (5) bereitgestellte Öffnung hindurchlaufen und sich überkreuzen, wenn sie durch besagte Manschette hindurchlaufen, wobei die Schulterriemen (3) an besagtem Körpergurtgeschirrgurt an entsprechenden mit Zwischenraum angeordneten Punkten hinter dem Träger befestigt sind.

2. Sicherheitsgurtgeschirr nach Anspruch 1, dadurch gekennzeichnet, daß besagte einstellbare Befestigungsmittel besagten statischen Gurtgeschirriemens (6) eine Schnalle (7) an einem Ende besagten Riemens (6) umfaßt und daß besagte Schnalle (7) zu groß ist, um durch die Öffnung in besagter Manschette (5) hindurchzugehen, wodurch besagte Schnalle (7), wenn der statische Gurtgeschirriemen vom Autositz gelöst ist, als ein Sicherungselement wirken kann, das verhindert, daß besagtes Körpergurtgeschirr sich von besagtem statischen Gurtgeschirriemen löst, der als ein Zügel oder eine Leine verwendet werden kann. der (die) an seinem (ihrem) anderen Ende von einem Erwachsenen gehalten wird, wobei der Körpergurtgeschirrteil und der statische Gurtgeschirriemen in diesem Fall als ein herkömmliches Gehgurtgeschirr mit Zügel funktionieren.

**Revendications**

1. Harnais de sécurité destiné à être utilisé par un enfant voyageant dans un véhicule, et comprenant une portion de harnais de corps (1—5) apte à être assujettie autour du corps de cette personne, cette portion de harnais de corps comprenant une ceinture (1) apte à s'étendre autour de la taille ou de la poitrine du porteur et à être assujettie par une boucle (2), deux bretelles (3) s'étendant chacune à partir d'une partie antérieure de la ceinture autour d'une épaule respective du porteur jusqu'à une partie arrière de la ceinture, un élément de guidage (5) porté par la portion de harnais de corps à l'arrière de celle-ci, le harnais de sécurité comprenant de plus une portion de harnais statique sous forme d'une sangle unique dotée de moyens de fixation réglables (7), ce grâce à quoi les extrémités de la sangle de harnais statique mentionnée en dernier peuvent être assujetties ensembles après avoir enroulé la sangle (6) autour d'un dossier de siège, la sangle de harnais statique (6) s'étendant à travers une ouverture fournie par cet élément de guidage (5), ce grâce à quoi l'élément de guidage, et avec lui la portion de harnais de corps, peut coulisser le long de cette sangle (6) tout en étant retenu sur celle-ci, caractérisé en ce que l'élément de guidage (5) est un collier ou bague annulaire (5) à travers laquelle passe librement la sangle de harnais statique (6), et en ce que les bretelles (3) passent également toutes deux à travers l'ouverture réalisée par le collier (5) et s'entrecroisent lorsqu'elles traversent ce collier, les bretelles (3) étant assujetties à la ceinture de harnais de corps aux points respectifs espacés l'un de l'autre derrière le porteur du harnais.

2. Harnais de sécurité selon la revendication 1, caractérisé en ce que le moyen de fixation réglable de la sangle de harnais statique (6) comprend une boucle (7) à une extrémité de la sangle (6) et en ce que la boucle (7) est trop grande pour traverser l'ouverture du collier (5), ce grâce à quoi, lorsque la sangle de harnais statique a été détachée du siège du véhicule, la boucle (7) peut servir d'élément de retenue empêchant le harnais de corps de se détacher de la sangle de harnais statique, laquelle peut servir de bride ou laisse tenue, à son autre extrémité par un adulte, la portion de harnais de corps et la sangle de harnais statique faisant office dans ce cas de harnais de marche classique à bride pour enfant.

*Fig.1.*

*Fig.2.*

1